# EUROPEAN PATENT APPLICATION

(11) **EP 3 226 181 A1**
(43) Date of publication of application: **04.10.2017**
(21) Application number: 17162661.7
(22) Date of filing: 23.03.2017
(51) Int. Cl.: G06Q 10/04, G06Q 10/10, G06T 17/00

(54) **APPARATUS, METHOD, AND PROGRAM FOR SUPPORTING DEVELOPMENT OF PRODUCTION LINE**

(30) Priority: 30.03.2016 JP 2016068281
(71) Applicant: Mitsubishi Jidosha Engineering Kabushiki Kaisha, Okazaki-shi, Aichi (JP); MITSUBISHI JIDOSHA KOGYO KABUSHIKI KAISHA, Tokyo 108-8410 (JP)
(72) Inventor: BOKKAI, Tomoya, Okazaki-shi, Aichi (JP); SHIOMI, Mitsuyo, Okazaki-shi, Aichi (JP); AZUMA, Hisashi, Okazaki-shi, Aichi (JP); NAKANO, Hiroshi, Tokyo, 108-8410 (JP)
(74) Representative: Vossius & Partner Patentanwälte Rechtsanwälte mbB

(57) **Abstract**

An development supporting apparatus provides an alert on possibilities of interference and existence of clearance between a jig provided on a line for producing a first workpiece and a second workpiece if conveyed on the line. By executing a program, the apparatus executes a method including creating models of the first and second workpieces based on geometric data thereof, creating an enlarged jig model in which a volume of the jig is enlarged, generating a reference geometric object defined by a region where the first workpiece model and the enlarged jig model overlap, generating a comparison geometric object defined by a region where the second workpiece model and the enlarged jig model overlap, comparing volumes of the reference geometric object and the comparison geometric object, and outputting a display corresponding to a result of the comparison.

## Description

### FIELD OF INVENTION

The present invention relates to an apparatus and a method for supporting a development of a production line and a computer readable medium storing a program for supporting the development of the production line, in particular for using a jig on an existing production line in producing a new workpiece.

### RELATED ART

In a design stage of an industrial product, it is conventionally examined whether a new workpiece can be produced in an existing production line using a computer simulation (see, e.g., JPH07-287725A and JPH10-3490A). An example of a method for such an examination includes superimposing a sectional view or a side view of a new workpiece on sectional views or side views of a jig, a tool and the like (hereinafter collectively referred to as "jigs") provided in an existing production line on a screen and visually judging whether the existing jigs can be used as they are for the new workpiece.

However, a visual judgment of the jigs one by one may make the design work time-consuming and may cause an omission in checking. A simulation capable of making a judgment without a visual observation may be built. However, even in such a case, merely superimposing the jig and the workpiece on a screen may not be able to provide sufficient alert, because it may not be able to determine whether a suitable clearance is provide between the jig and the workpiece in cases where the jig and the workpiece do not overlap each other. Between the jig and the workpiece, there can be a clearance that is so large that the jig cannot touch the workpiece. However, such a large clearance cannot be determined with the method described above.

### SUMMARY

Illustrative aspects of the present invention provide an apparatus and a method for supporting a development of a production line and a computer readable medium storing a program for supporting the development of the production line, capable of suitably providing an alert on a possibility of an interference and a clearance between a jig and a workpiece without an omission of checking of a jig and a workpiece.

According to an illustrative aspect of the present invention, an apparatus for supporting a development of a production line is provided. The apparatus is configured to execute an alert on a possibility of an interference and a possibility of an existence of a clearance between a jig provided on a line for producing a first workpiece and a second workpiece in a case where the second workpiece that is different from the first workpiece is conveyed on the line. The apparatus includes a model creating section, a generating section, a determining section, and an output section. The model creating section creates a first workpiece model based on geometric data of the first workpiece, a second workpiece model based on geometric data of the second workpiece, and an enlarged jig model in which a volume of the jig is enlarged. The generating section generates, as a reference geometric object, a geometric object defined by a region where the first workpiece model and the enlarged jig model overlap each other, and generates, as a comparison geometric object, a geometric object defined by a region where the second workpiece model and the enlarged jig model overlap each other. The determining section compares a volume of the reference geometric object and a volume of the comparison geometric object. The output section outputs a display corresponding to a result of the comparison made by the determining section.

According to an illustrative aspect of the present invention, a method for supporting a development of a production line is provided. The method is for caussing a computer to execute an alert on a possibility of an interference and a possibility of an existence of a clearance between a jig provided on a line for producing a first workpiece and a second workpiece in a case where the second workpiece that is different from the first workpiece is conveyed on the line. The method includes creating a model of the first workpiece based on geometric data of the first workpiece, creating a second workpiece model based on geometric data of the second workpiece, creating an enlarged jig model in which a volume of the jig is enlarged, generating, as a reference geometric object, a geometric object defined by a region where the first workpiece model and the enlarged jig model overlap each other, generating, as a comparison geometric object, a geometric object defined by a region where the second workpiece model and the enlarged jig model overlap each other, comparing a volume of the reference geometric object and a volume of the comparison geometric object, and outputting a display corresponding to a result of the comparison.

According to an illustrative aspect of the present invention, a program for supporting a development of a production line is provided. When executed on a computer, the program causes the computer to execute the method described above. The program may be stored in a computer readable medium.

### BRIEF DESCRIPTION OF THE DRAWINGS

Fig. 1 is a block diagram of a development supporting apparatus according to an embodiment of the present invention;
Fig. 2 is a schematic view illustrating a production line;
Fig. 3A is a schematic view illustrating a current workpiece model created by a model creating section;
Fig. 3B is a schematic view illustrating a new workpiece model created by the model creating section;
Fig. 4 illustrates a specific example a determination made by a determining section;
Fig. 5 illustrates a specific example of another determination made by the determining section;
Fig. 6 illustrates a specific example of yet another determination made by the determining section; and
Fig. 7 is an example of a flow chart of a development supporting method according to an embodiment of the present invention.

### DETAILED DESCRIPTION

An apparatus, a method, and a program for supporting a development of a production line according to an embodiment will be described with reference to the drawings. The embodiment described below is merely exemplary, and is not intended to exclude various modifications or applications of techniques not explicitly described in the following embodiment. Respective elements of the embodiment may be implemented with various modifications, may be selectively provided or omitted as needed, and/or may be combined as appropriate.

### 1. Overview

An apparatus for supporting a development of a production line according to an embodiment of the present invention is configured to execute a process (an alert process) for providing an alert on a possibility of an interference and a possibility of an existence of a clearance between a new workpiece and a jig provided in an existing production line when examining whether the jig can also be used for producing the new workpiece. A development supporting method and a development supporting program according to an embodiment of the present invention are for causing a computer to execute the alert process. A result alerted here is used for changing a design of a configuration of the new workpiece or a configuration of the jig in a subsequent stage of design examination.

The existing production line is equipment for producing a current workpiece (a first workpiece). The development supporting apparatus performs a modeling process for modeling a hypothetical situation where a new workpiece (a second workpiece) that is different from the current workpiece is conveyed on the production line. Next, the apparatus performs determination process for determining a possibility of interference between the jig and the new workpiece on the production line, and a possibility of existence of a clearance therebetween. Then, the apparatus performs display process in accordance with a result of the determination process. That is, the alert process includes the modeling process, the determination process and the display process.

In the embodiment, assuming a multi-model single-line production, detailed description will be made on the alert process to be performed prior to design examination of a jig that can convey a plurality of models of workpieces on a single production line (or can deal with a plurality of models of workpieces). The "interference" here means that the existing jig interferes with production of the new workpiece. That is, determination of "no interference" is made when the jig and the new workpiece are in proper contact with each other or when there is a clearance therebetween.

On the other hand, the words "existence of a clearance" means that the existing jig and the new workpiece have no interference with each other and are in no contact with each other. The clearance includes a clearance with a proper size and a clearance with an improper size for production. For example, when a support face of the jig for supporting the new workpiece is not in contact with the new workpiece, a clearance between the support face and the new workpiece corresponds to the "improper clearance". On the other hand, when another face than the support face in the jig is not in contact with the new workpiece, the clearance may correspond to the "proper clearance". In addition, a clearance large enough to allow the jig to fail in locking the new workpiece may correspond to the "improper clearance".

In the modeling process, geometric data (such as three-dimensional CAD data) of the existing jig and each workpiece (current workpiece and new workpiece) are used for modeling the jig, the existing workpiece and the new workpiece. With regard to the jig, a model (enlarged jig model) is created such that a volume is three-dimensionally enlarged with the center of gravity of the jig as a center point. On the other hand, for each workpiece, a model (workpiece model) of the actual configuration is created based on the geometric data.

In the determination process, the enlarged jig model and the workpiece model of the current workpiece (current workpiece model) are displayed in their respective positions on one working screen. A geometric object defined by a region where the two models overlap each other is generated as a "reference geometric object". In the same manner, the enlarged jig model and the workpiece model of the new workpiece (new workpiece model) are displayed in their respective positions on another working screen. A geometric object defined by a region where the two models overlap each other is generated as a "comparison geometric object". The volume of the reference geometric object and the volume of the comparison geometric object are compared. Possibility of interference and possibility of a clearance are determined based on a difference in these volumes.

In the display process, display is performed in accordance with a result of the determination process. An example of a method for the display may include a method in the comparison geometric object is displayed with different colors or patterns between a case where the volume of the comparison geometric object is greater than the volume of the reference geometric object and a case where the volume of the comparison geometric object is smaller than the volume of the reference geometric object. According to another method, the comparison geometric object may be displayed by more detailed coloring or the like in accordance with an amount of difference or a rate of difference of the volume of the comparison geometric object with respect to the volume of the reference geometric object as well as whether the volume of the comparison geometric object is larger or smaller than the volume of the reference geometric object. When the comparison geometric object is not generated (that is, when the enlarged jig model and the new workpiece model do not overlap each other), the volume of the comparison geometric object is zero. In this case, a method in which the reference geometric object is displayed with a color or a pattern indicating the volume of the comparison geometric object is zero may be used.

Here, why the volume of the jig is enlarged in the modeling process will be described. If a model of the actual configuration is created also for the jig in the modeling process, the model of the jig provided for producing the current workpiece naturally has no interference with the current workpiece model - there may be a portion (e.g., a support face) that abuts without any clearance or a portion provided with a suitable clearance. Here, when the jig model is displayed in position together with the new workpiece model, and if these models overlap each other, an operator can visually determine that "the jig and the new workpiece will interfere with each other". However, if the models do not overlap each other, the operator can determine they will not interfere, but cannot determine anything further (e.g., whether there is a clearance or not, or whether the size of the clearance is suitable). Therefore, information that can be used for consideration in a subsequent stage of design examination is limited, so it may take long time to reach a final configuration of the workpiece or the jig.

On the other hand, in the development supporting apparatus according to the embodiment, the model (enlarged jig model) in which the volume of the jig is enlarged is created so that the enlarged jig model can interfere with the current workpiece model on the working screen. The geometric object defined by this interfering region is generated as "reference geometric object". Further, with the new workpiece model, how the volume of the geometric object (that is, the comparison geometric object) of a region defined in a similar manner as the reference geometric object has been changed is calculated. Thus, display is performed in accordance with the change (comparison result). In this manner, display is performed in accordance with the change in volume of the comparison geometric object with respect to the volume of the reference geometric object so that the operator can determine not only interference or possibility of interference between the jig and the new workpiece but also possibility of existence of a clearance between the jig and the new workpiece, or the size of the clearance.

For example, when the volume of the comparison geometric object increases relatively to the reference geometric object, the jig and the new workpiece are more likely to interfere each other, or it is more likely that a suitable clearance will not be provided (the clearance is narrowed in comparison with the current workpiece). In this case, by providing a display for the "volume increase case", it is possible to provide an alert to inform the operator of possibility of interference or possibility of an improper clearance. On the contrary, when the volume of the comparison geometric object decreases relatively to the reference geometric object, a clearance is more likely to exist, and the clearance may be improper (the clearance may be widened in comparison with that in the current workpiece). In this case, by providing a display for the "volume decrease case", it is possible to provide an alert to inform the operator of possibility of existence of a clearance or possibility of an improper clearance.

When the volume of the comparison geometric object is zero, it is very likely that a clearance will exist between the jig and the new workpiece in comparison with the current workpiece. In this case, by providing a display for the "comparison geometric object - zero volume case", it is possible to provide an alert to inform the operator of possibility of existence of a clearance or possibility of a large clearance. When the display in the case of decrease in volume is separated from the display in the case of zero comparison volume, it is possible to provide an alert to inform the operator of the large/small size of the clearance.

In this manner, in the apparatus for supporting development, a change in volume is obtained for each jig, and processing for display corresponding to a result of the obtained change is performed entirely automatically (on a computer). Thus, it is possible to prevent omission of examination and it is possible to shorten time of the examination. Further, materials for consideration that can be used in a subsequent state of design examination can be increased. Thus, it is also possible to shorten time required to obtain a final configuration of the new workpiece or the jig.

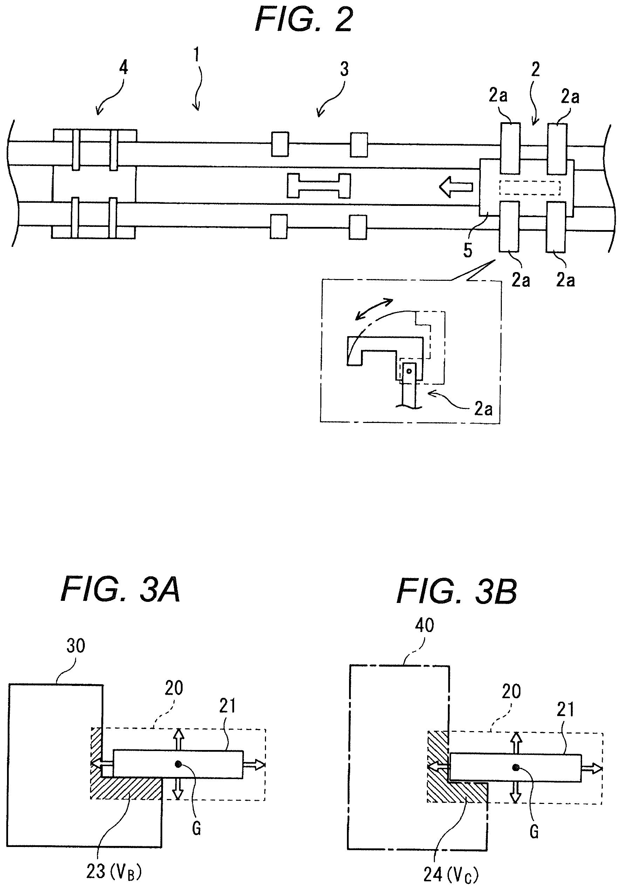

An example of a production line is shown in Fig. 2. A plurality of equipment units 2 to 4 are provided in parallel in a conveyance direction. A current workpiece 5 is conveyed on a production line 1. A plurality of jigs is provided in each equipment unit 2 to 4. The development supporting apparatus performs the alert process described above for each equipment unit 2 to 4 and for each of the jigs belonging to the equipment unit. In a case where, for example, a jig 2a of the equipment unit 2 is a movable jig that moves along a given track, the track is considered in the modeling process, and an enlarged jig model of the movable jig 2a including the track is created. That is, the entire track along which the movable jig 2a moves (the entire range where the movable jig 2a moves) is regarded as a jig, and the volume of this region is enlarged to create the enlarged jig model. Alternatively, the entire track along which the movable jig 2a having the increased moves may be set as the enlarged jig model.

### 2. Apparatus Configuration

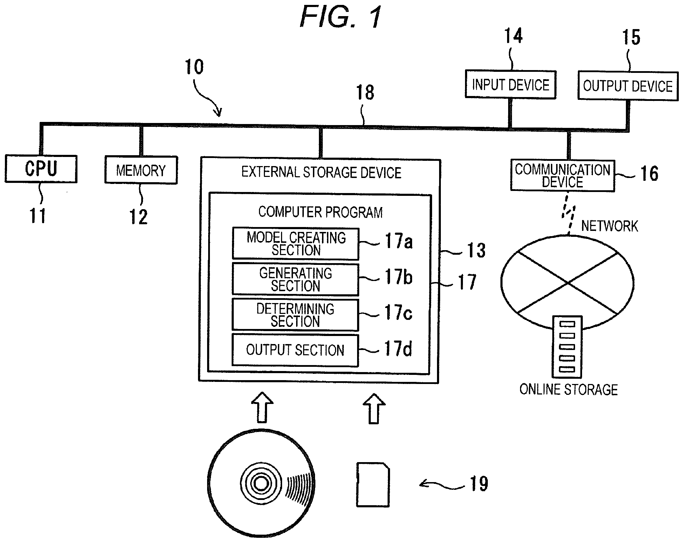

The development supporting apparatus according to the embodiment is implemented by a general purpose computer that can execute a computer program 17 (a supporting development program) for examination process. Fig. 1 is a schematic view of the development supporting apparatus configured by using a computer 10.

The computer 10 (a supporting development apparatus) has a central processing unit (CPU) 1, a memory 12 such as a read only memory (ROM), a random access memory (RAM), or the like, an external storage device 13 such as a hard disk drive (HDD), a solid state drive (SSD), an optical drive, a flash memory, a reader/writer, or the like, an input device 14 such as a keyboard, a mouse, or the like, an output device 15 such as a display, a printer, or the like, and a communication device 16 (a wireless or cable transmitter/receiver). These devices are connected through a bus 18 (such as a control bus, a data bus, etc.) provided inside the computer 10, so that they can communicate with one another. The computer program 17 is installed in the external storage device 13.

The computer program 17 may be recorded in a recording medium 19 that can be read by an optical drive, a flash memory, a reader/writer, etc. Alternatively, the computer program 17 may be recorded in an online storage on a network to which the computer 10 can be connected. In any case, the computer program 17 is downloaded onto an HDD, an SDD or the like of the computer 10 or read into the CPU 11 or the memory 12. Thus, the computer program 17 can be executed.

The CPU 11 in the embodiment reads the program installed in the external storage device 13 onto the memory 12, executes the program, and outputs a result of calculation to the output device 15. To set the configurations of the jig, the current workpiece and the new workpiece, data produced by general purpose three-dimensional computer aided design (CAD) software is used for the computer program 17, or data is input from the input device 14. In addition, data required for the alert process is set based on input from the input device 14 or as default values.

The data required for the alert process may include geometric data (CAD data) of each of the jigs, geometric data (CAD data) of each of the current workpiece and the new workpiece, an enlargement rate of the jig, positioning information (origin position) between the jig and the current workpiece, positioning information (origin position) between the jig and the new workpiece, etc.

Functions of the computer program 17 for executing the alert process are schematically illustrated in Fig. 1. A model creating section 17a, a generating section 17b, a determining section 17c and an output section 17d are provided in the computer program 17. These elements may be implemented by an electronic circuit (hardware). Alternatively, one or more of the functions may be provided as hardware providing the others as software.

The model creating section 17a performs the modeling process. That is, the current workpiece model and the new workpiece model are created based on the respective geometric data of the current workpiece and the new workpiece, while the enlarged jig model is created based on the geometric data of each jig and the enlargement rate thereof. Model examples created by the model creating section 17a are shown in Figs. 3A and 3B. As shown in Figs. 3A and 3B, the model creating section 17a creates a current workpiece model 30 and a new workpiece model 40, and creates an enlarged jig model 20 in which the volume of a jig 21 has been enlarged.

The model creating section 17a in the embodiment creates the enlarged jig model 20 with the center of gravity of the jig 21 as a center point G and with the volume enlarged three-dimensionally from the center point G. That is, the model creating section 17a creates a model in which the outer shape of the jig 21 has been expanded (enlarged) in three directions, that is, a front-rear direction, a left-right direction and an up-down direction from the center point G of the jig 21. The enlargement rate of the enlarged jig model is set at a rate with which the enlarged jig model can surely interfere with the current workpiece model. When the jig 21 is a movable jig 2a as shown in Fig. 2, the model creating section 17a creates an enlarged jig model of the movable jig 2a including a track thereof.

The generating section 17b and the determining section 17c perform the determination process. That is, the generating section 17b generates a geometric object defined by a region where the current workpiece model 30 and the enlarged jig model 20 overlap each other as a reference geometric object. The generating section 17b also generates another geometric object defined by a region where the new workpiece model 40 and the enlarged jig model 20 overlap each other as a comparison geometric object. Next, the determining section 17c compares the volume of the reference geometric object and the volume of the comparison geometric object with each other, and determines a possibility of interference and a possibility of a clearance between the new workpiece and the jig.

For example, as shown in Fig. 3A, the generating section 17b displays the enlarged jig model 20 and the current workpiece model 30 in their respective positions on one working screen, and generates, as a reference geometric object 23, a geometric object defined by a region (the hatched region in Fig. 3A) where the two models overlap each other. In addition, as shown in Fig. 3B, the generating section 17b displays the enlarged jig model 20 and the new workpiece model 40 in their respective positions on another working screen, and generates, as a comparison geometric object 24, a geometric object defined by a region (the hatched region in Fig. 3B) where the two models overlap each other.

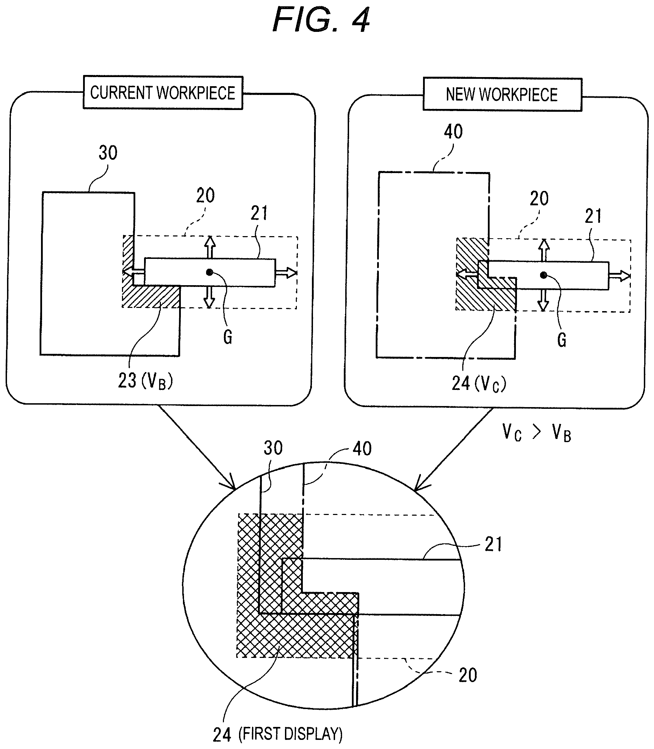

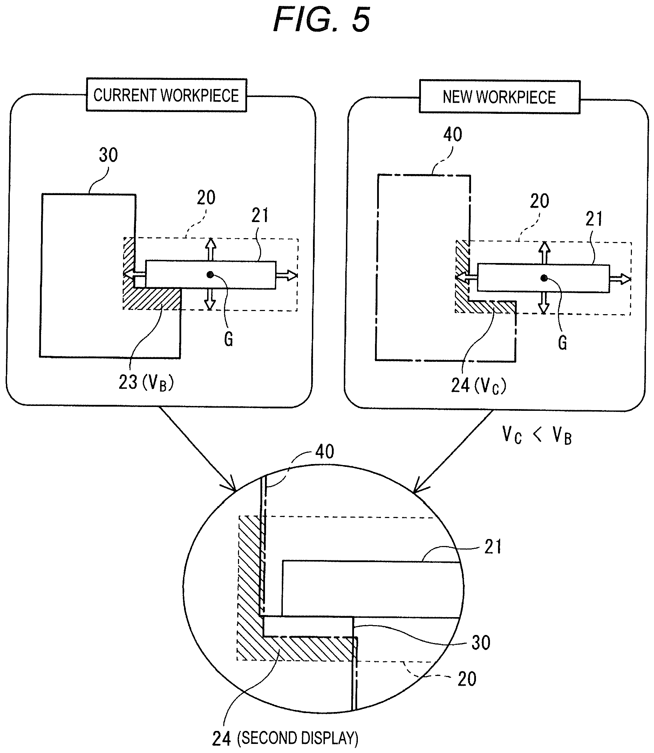

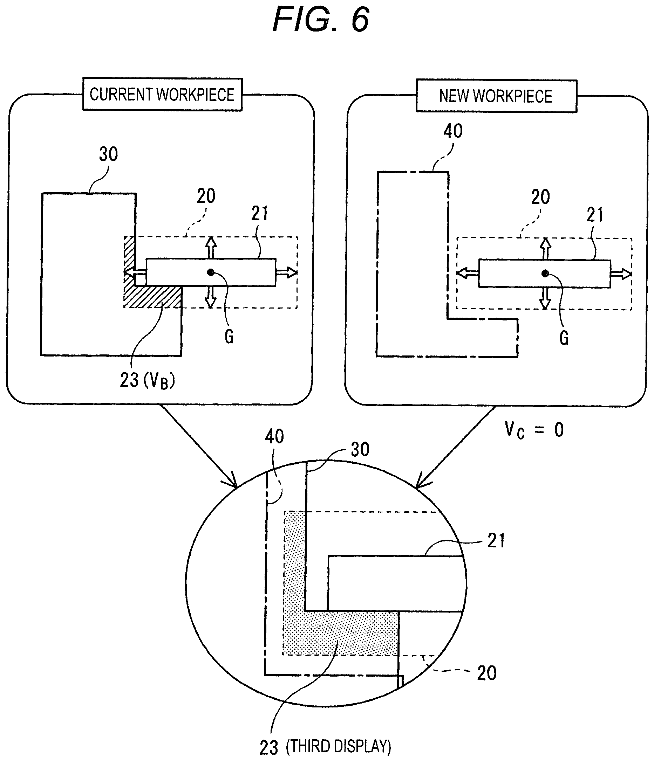

Next, the determining section 17c calculates and compares a volume VB of the reference geometric object 23 generated by the generating section 17b and a volume VC of the comparison geometric object 24 generated likewise, and performs the determination from a difference between the volumes. As shown in Fig. 4, the determining section 17c determines that the jig 21 and the new workpiece are more likely to interfere each other when the volume VC of the comparison geometric object 24 is greater than the volume VB of the reference geometric object 23. In contrast, as shown in Fig. 5, the determining section 17c determines that it is more likely that a clearance will exist between the jig 21 and the new workpiece when the volume VC of the comparison geometric object 24 is smaller than the volume VB of the reference geometric object 23. Further, as shown in Fig. 6, the determining section 17c determines that there will be a clearance (a large clearance) between the jig 21 and the new workpiece when the volume VC of the comparison geometric object 24 is zero. The determining section 17c performs determination of three patterns as shown in Figs. 4 to 6. However, the determining section 17c may calculate an amount of difference or a rate of difference between the two volumes VB and VC, and perform more detailed determination.

The output section 17d performs the display process. That is, the output section 17d provides a display corresponding to the result of the determination (comparison result) by the determining section 17c together with the display of the new workpiece model, so as to provide an alert to inform the operator of the determination result and a portion of the new workpiece that needs to be considered. The output section 17d displays the comparison geometric object 24 with a mesh pattern (first display) when it is determined that the new workpiece and the jig 21 are more likely interfere each other (VC>VB) as shown in Fig. 4. In contrast, when it is determined that it is more likely that the clearance will exist between the new workpiece and the jig 21 (VC<VB) as shown in Fig. 5, the output section 17d displays the comparison geometric object 24 with right-downward hatching (second display). Further, when it is determined that there will be a clearance (a large clearance) between the new workpiece and the jig 21 (VC=0) as shown in Fig. 6, the output section 17d displays the reference geometric object 23 with dots (third display). The display may be performed with different colors, instead of patterns. When performing more detailed determination, display may be performed by combination of colors and patterns.

Examples of display methods by the output section 17d may include a method in which just after determination for each of a plurality of jigs belonging to each equipment unit, display corresponding to a result of the determination is performed for the jig, and a method in which after termination of determination for all of jigs belonging to equipment units, display corresponding to results of determination for the jigs respectively is performed collectively on a screen for each of the equipment units. In the latter method, it is preferable that results of determination for the jigs are stored temporarily, and the results of determination for all the jigs are displayed to be superimposed on an overall image (skeleton model) of a new workpiece model at the end. In this case, the portion of the new workpiece model that requires consideration (the portion corresponding to the jigs) and results of determination for the jigs (interference, small clearance, large clearance) can be veiwed all at once.

### 3. Flow Chart

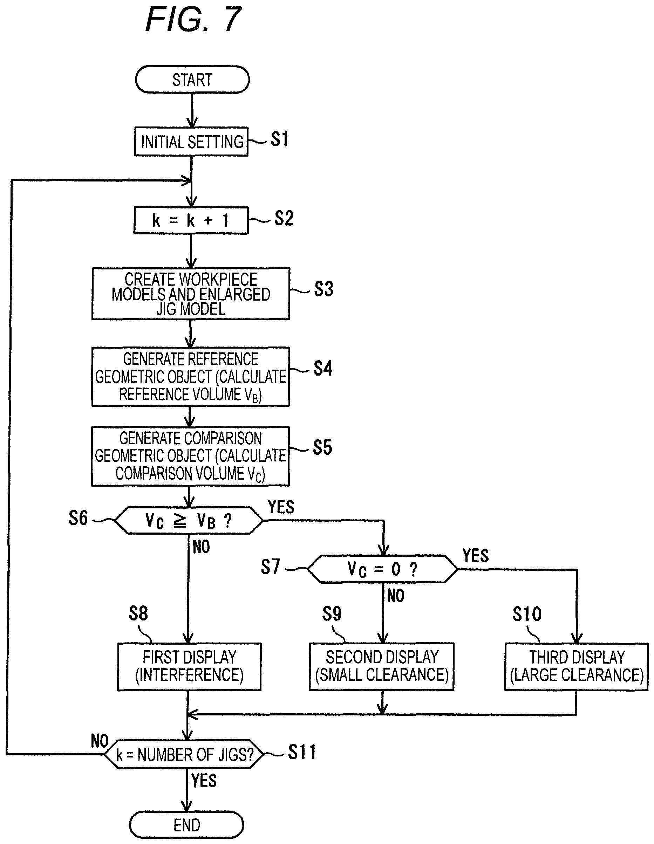

Fig. 7 is a flow chart showing a procedure (development supporting method) in which the computer 10 executes the computer program 17, by way of example. The flow chart is carried out for each of equipment units provided on a production line. Step S1 is a step of initial setting. In Step S1, data required for the alert process is prepared, or input from the external storage device 13, the input device 14, etc. In addition, a count value k for use in the flow chart is set as k=0. The count value k is to count the number of jigs (jigs to be examined) belonging to the equipment unit. The count value k is counted up one by one in Step S2. A number is assigned to each jig, and a jig whose number corresponds to the count value k is selected in Step S2.

In Step S3 (model creating step), workpiece models of the current workpiece and the new workpiece are created by the model creating section 17a, and an enlarged jig model is created by the same. Step S4 and Step S5 are generation steps carried out by the generating section 17b. In Step S4, a geometric object defined by a region where the current workpiece model and the enlarged jig model overlap each other is generated as a reference geometric object, and the volume of the reference geometric object is calculated as a reference volume VB. In Step S5, a geometric object defined by a region where the new workpiece model and the enlarged jig model overlap each other is generated as a comparison geometric object, and the volume of the comparison geometric object is calculated as a comparison volume VC.

Steps S6 and S7 are determination steps carried out by the determining section 17c. In Step S6, it is determined whether the comparison volume VC reaches at least the reference volume VB or not. When VC≥VB, it is determined that the interference is more likely to occur, and processing goes to Step S8. When VC<VB, it is determined that possibility of interference is low, and processing goes to Step S7. In Step S7, it is determined whether the comparison volume VC is zero or not. When VC=0, it is determined that there is a clearance (large clearance), and processing goes to Step S10. When VC is not zero (not VC=0), it is determined that the clearance is small, and processing goes to Step S9.

Steps S8 to S10 are output steps carried out by the output section 17d. Different patterns are displayed in the steps respectively. For example, in Step S8, the comparison geometric object 24 is displayed with a mesh pattern (first display) shown in Fig. 4. In Step S9, the comparison geometric object 24 is displayed with hatching (second display) shown in Fig. 5. In Step S10, the reference geometric object 23 is displayed with dots (third display) shown in Fig. 6. In the flow chart, after termination of determination for all the jigs belonging to the equipment unit, display corresponding to results of determination for the jigs respectively may be performed collectively on one screen. In this case, in Steps S8 to S10, each determination result is stored.

In Step S11, it is determined whether the count value k is equal to the number of jigs belonging to the equipment unit or not. When the condition of Step S 11 is not established, processing returns to Step S2, in which a jig having the next number is selected, and processing of Steps S3 to S11 is carried out again. Then, when all the jigs belonging to the equipment unit have been completely examined, the flow is terminated. When display corresponding to results of determination is performed collectively on one screen after determination of all the jigs is terminated, display corresponding to stored results may be displayed to be superimposed on the overall image (skeleton model) of the new workpiece model after the condition of Step S11 is established.

### 4. Advantages

According to the development supporting apparatus (the computer 10), the development supporting method and the development supporting program 17 described above, the volume of a jig is enlarged into a model so that not only possibility of interference between the existing jig and a new workpiece but also possibility of existence of a clearance can be determined. Then, display corresponding to a result of comparison is performed so that a suitable alert can be provided to inform an operator of the possibility of interference and the possibility of the clearance between the existing jig and the new workpiece. In addition, models are formed for each workpiece and each jig, and the models are compared and displayed by computer processing, so that it is possible to prevent omission of examination between the jig and the workpiece and it is also possible to shorten time of the examination. By providing the suitable alert on the possibility of interference and the possibility of the clearance between the existing jig and the new workpiece, it is also possible to shorten time of design examination to be performed after the alert process.

For example, as shown in Fig. 3A, the model creating section 17a creates a jig model with the center of gravity of the jig 21 as the center point G based on the geometric data of the jig 21, and enlarges the volume of the jig model three-dimensionally from the center point G. Thus, the enlarged jig model 20 is created. Accordingly, it is possible to determine the possibility of interference and the possibility of the clearance all over the circumference (three-dimensional directions) of the jig. It is therefore possible to provide an alert in a more suitable manner.

Further, when the jig is a movable jig moving in a predetermined track (e.g., the jig 2a in Fig. 2), the model creating section 17a creates an enlarged jig model of the movable jig including the track. Accordingly, it is possible to determine the possibility of interference and the possibility of the clearance within a movable range. It is therefore possible to provide an alert in a more suitable manner.

When the volume VC of the comparison geometric object 24 is greater than the volume VB of the reference geometric object 23, the determining section 17c determines the jig 21 and the new workpiece are more likely to interfere with each other. In contrast, when the volume VC of the comparison geometric object 24 is smaller than the volume VB of the reference geometric object 23, the determining section 17c determines that it is more likely that a clearance will exist between the jig 21 and the new workpiece. In this manner, an alert on the possibility of interference and the possibility of the clearance can be provided with a simple configuration in which the two volumes VB and VC are compared with each other as to their large/small relation.

Further, when the volume VC of the comparison geometric object 24 is zero, the determining section 17c determines that there will a clearance between the jig 21 and the new workpiece. Accordingly, an alert can be provided after the existence of the clearance is determined. Thus, it is possible to shorten time of design examination in a subsequent stage.

### 5. Others

While the present invention has been described above with certain embodiments thereof, the present invention is not limited to the embodiments described above, and various changes and modification may be made therein without departing the scope of the invention.

Specific features of the development supporting apparatus described above are merely exemplary, and are not limited to those described above. For example, in the modeling process, a jig model following a actual configuration of a jig may be creased based on three-dimensional CAD data of the jig, and then enlarged at a predetermined rate to create an enlarged jig model. In addition, the enlarged jig model does not have to be enlarged three-dimensionally with the center of gravity of the jig as the center point G. For example, in an enlarged jig model, of a plurality of side faces, one or some faces may be enlarged outward instead of use of the center of gravity.

Instead of calculating the volumes of the generated reference geometric object and the generated comparison geometric object as numeric values, a determination may be made by superimposing these geometric objects on a screen, and calculating a volume of a portion where the geometric objects do not overlap each other to compare the volumes.

The development supporting apparatus has been described along an example in which modeling is performed on the assumption that one new workpiece is conveyed on a production line for producing a current workpiece. However, modeling may be performed on the assumption that a plurality of new workpieces are conveyed on a single production line. In addition, multi-model single-line production has been assumed in the development supporting apparatus. However, the development supporting apparatus can be applied to a case in which only one new model (new workpiece) is produced in an existing production line (single-model single-line production).

## Claims

1. An apparatus (10) for supporting a development of a production line, the apparatus (10) being configured to execute an alert on a possibility of an interference and a possibility of an existence of a clearance between a jig (21) provided on a line (1) for producing a first workpiece and a second workpiece in a case where the second workpiece that is different from the first workpiece is conveyed on the line (1),
**characterized in that** the apparatus (10) comprises:
a model creating section (17a) that creates a first workpiece model (30) based on geometric data of the first workpiece, a second workpiece model (40) based on geometric data of the second workpiece, and an enlarged jig model (20) in which a volume of the jig (21) is enlarged;
a generating section (17b) that generates, as a reference geometric object (23), a geometric object defined by a region where the first workpiece model (30) and the enlarged jig model (20) overlap each other, and generates, as a comparison geometric object (24), a geometric object defined by a region where the second workpiece model (40) and the enlarged jig model (20) overlap each other;
a determining section (17c) that compares a volume of the reference geometric object (23) and a volume of the comparison geometric object (24); and
an output section (17d) that outputs a display corresponding to a result of the comparison made by the determining section (17c).

2. The apparatus (10) according to claim 1, wherein the model creating section (17a) creates the enlarged jig model (20) such that the volume is enlarged three-dimensionally from a center point (G), the center point (G) being a center of gravity of the jig (21) based on the geometric data of the jig (21).

3. The apparatus (10) according to claim 1 or 2, wherein the jig (21) includes a movable jig (2a) that moves along a given track; and
the model creating section (17a) creates the enlarged jig model (20) of the movable jig (2a) including the track.

4. The apparatus (10) according to any one of claims 1 to 3, wherein the determining section (17c) determines that the interference is more likely to occur when the volume of the comparison geometric object (24) is greater than the volume of the reference geometric object (23), and determines that the clearance is more likely to exist when the volume of the comparison geometric object (24) is smaller than the volume of the reference geometric object (23).

5. The apparatus (10) according to any one of claims 1 to 4, wherein the determining section (17c) determines that the clearance will exist between the second workpiece and the jig (21) when the volume of the comparison geometric object (24) is zero.

6. A method for supporting a development of a production line, the method causing a computer (10) to execute an alert on a possibility of an interference and a possibility of an existence of a clearance between a jig (21) provided on a line (1) for producing a first workpiece and a second workpiece in a case where the second workpiece that is different from the first workpiece is conveyed on the line (1),
**characterized in that** the method comprises:
creating a model of the first workpiece based on geometric data of the first workpiece, creating a second workpiece model (40) based on geometric data of the second workpiece, and creating an enlarged jig model (20) in which a volume of the jig (21) is enlarged;
generating, as a reference geometric object (23), a geometric object defined by a region where the first workpiece model (30) and the enlarged jig model (20) overlap each other, and generating, as a comparison geometric object (24), a geometric object defined by a region where the second workpiece model (40) and the enlarged jig model (20) overlap each other;
comparing a volume of the reference geometric object (23) and a volume of the comparison geometric object (24); and
outputting a display corresponding to a result of the comparison.

7. A program for supporting a development of a production line, wherein the program, when executed on a computer (10), causes the computer (10) to execute the method according to claim 6.

8. A computer readable medium (19) storing the program according to claim 7.
